# EUROPEAN PATENT SPECIFICATION

(11) **EP 3 749 929 B1**
(45) Date of publication and mention of the grant of the patent: **28.09.2022**
(21) Application number: 19705834.0
(22) Date of filing: 07.02.2019
(51) Int. Cl.: G01D 5/30

(54) **OPTICAL ROTARY ENCODER WITH INTEGRATED OPTICAL PUSH-BUTTON**
OPTISCHER DREHCODIERER MIT INTEGRIERTEM OPTISCHEM DRUCKKNOPF
CODEUR OPTIQUE ROTATIF À BOUTON-POUSSOIR OPTIQUE INTÉGRÉ

(30) Priority: 06.02.2018 US 201862626804 P
(43) Date of publication of application: 16.12.2020
(73) Proprietor: AMS Sensors Singapore Pte. Ltd., Singapore 569877 (SG)
(72) Inventor: DANTLER, Markus, 5656 AE Eindhoven (NL); JÄGGI, Alison Marie, 5656 AE Eindhoven (NL); LENART, Robert, 5656 AE Eindhoven (NL); SPRING, Nicola, 5656 AE Eindhoven (NL)
(74) Representative: Marks & Clerk LLP
(86) International application number: PCT/SG2019/050068
(87) International publication number: WO 2019/156629

(56) References cited:
- EP-A2- 0 382 351
- EP-A2- 1 736 738
- WO-A1-01/22038
- WO-A1-01/46644
- WO-A1-2014/200766

## Description

### TECHNICAL FIELD

The disclosure relates to optical rotary encoders.

### BACKGROUND

Rotary encoders (sometimes called shaft encoders) are devices that measure the angular position and/or motion of a shaft or axle. The measurements that are obtained by a rotary encoder can be converted into an analog or digital output for further processing. Rotary encoders can be used in various applications (e.g., devices that detect and/or control the rotation of a shaft or axle). Rotary encoders can include one or more mechanical, optical, magnetic, and/or capacitive components. For example, a rotary encoder can be implemented as an electro-mechanical device.

WO0146644 discloses a position and movement meter, as well as a distance meter comprising such a position and movement meter. EP0382351A2 discloses a hand-controlled mechanism for producing signals to move the position of a cursor in a computer display. WO0122038A1 discloses a method and system for measuring kinematic properties of a steering shaft. EP1736738A2 discloses an optical displacement probe for determining axial and radial displacement in a rotating component, and an associated method.

### SUMMARY

The invention is set out in the appended set of claims. In an aspect, an optical encoder includes a rotary shaft having a rotational axis. The rotary shaft is actuatable along the rotational axis. The optical encoder also includes at least one light generating element operable to generate light, and at least one light detecting element operable to detect light and convert the detected light into a signal. The rotary shaft includes a portion operable to reflect light generated from the at least one light generating element onto the at least one light detecting element wherein the signal is generated. The portion is configured such that an actuation of the rotary shaft from a first position to a second position generates a corresponding change in the signal generated in the at least one light detecting element.

Implementations of this aspect can include one or more of the following features.

For example, in some implementations, the portion can include a plurality of sub-portions having different optical properties such that the actuation of the rotary shaft from the first position to second position generates the corresponding change in the signal generated in the at least one light detecting element.

In some implementations, the at least one sub-portion within the plurality can have a substantially different reflectivity than another sub-portion within the plurality.

In some implementations, at least one sub-portion within the plurality can be substantially absorbing.

In some implementations, the at least one sub-portion within the plurality can have a substantially different optical property than another sub-portion within the plurality.

In some implementations, the portion can be tapered along the rotational axis of the rotary shaft, such that the actuation of the rotary shaft from the first position to the second position generates the corresponding change in the signal generated in the at least one light detecting element.

The corresponding change in the signal generated in the at least one light detecting element is correlated with a user actuation of the rotary shaft.

The corresponding change in the signal generated in the at least one light detecting element is further correlated with the speed of the user actuation of the rotary shaft.

The optical encoder further includes a computational unit. The computational unit is in electrical communication with the at least one light detecting element. The computational unit is operable to receive the signal from the at least one light detecting element, and correlate the corresponding change in the signal to the user actuation of the rotary shaft.

The computational unit is further operable to receive the signal from the at least one light detecting element, and correlate the corresponding change in the signal to the user actuation of the rotary shaft and the speed of the actuation.

In some implementations, the computational unit can include a microprocessor, a central processing unit, and/or a micro-controller.

In some implementations, at least a portion of the computational unit can be included in a host device.

In some implementations, the host device can be a portable computational device.

In some implementations, the portable computational device can be a smartphone or a smartwatch.

The details of one or more implementations are set forth in the accompanying drawings and the description below. Other aspects, features and advantages will be apparent from the description and drawings, and from the claims.

### BRIEF DESCRIPTION OF DRAWINGS

FIG. 1 is a diagram of an example system for measuring the angular position and/or motion of a rotary shaft.
FIG. 2 is a plot of an example measurement signal obtained by a receiving element.
FIG. 3 is a plot of example measurement signals obtained by receiving elements.
FIG. 4 is a diagram of another example system for measuring the angular position and/or motion of a rotary shaft.
FIG. 5 is a diagram of an example electronic device.
FIG. 6 is a diagram of an example system for measuring the angular position and/or motion of a rotary shaft and detecting a longitudinal movement of the rotary shaft.
FIGS. 7 and 8 are diagrams of another example system for measuring the angular position and/or motion of a rotary shaft and detecting a longitudinal movement of the rotary shaft.
FIG. 9 is a plot of example measurement signals obtained by receiving elements.
FIG. 10 is a diagram of another example system for measuring the angular position and/or motion of a rotary shaft and detecting a longitudinal movement of the rotary shaft.
FIG. 11 is a plot of example measurement signals obtained by receiving elements.
FIG. 12 is a diagram of example rotary shafts having markings for detecting longitudinal movements of the rotary shafts.
FIG. 13 is a schematic diagram of an example computer system.

### DETAILED DESCRIPTION

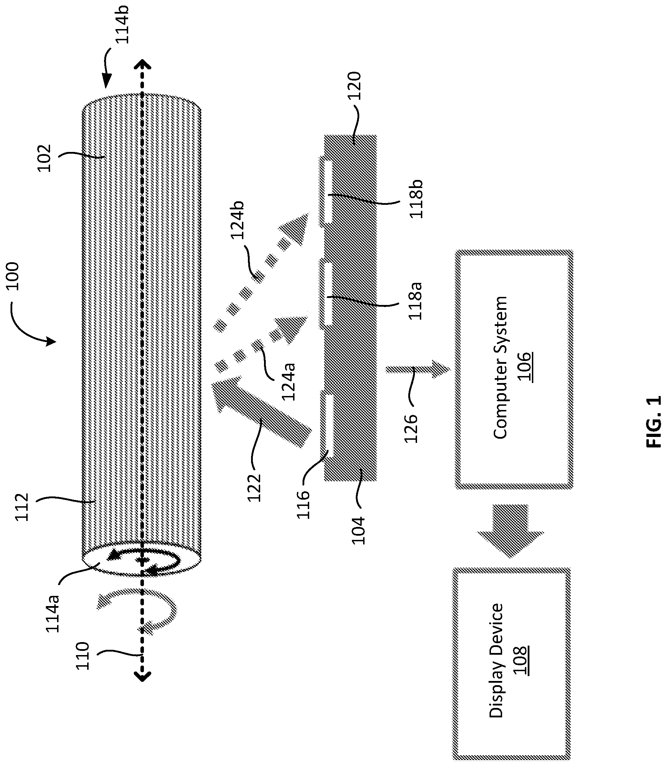

FIG. 1 shows an example system 100 for measuring the angular position and/or motion of a rotary shaft 102. The system 100 includes an optical rotary encoder 104, a computer system 106, and a display device 108.

The rotary shaft 102 is generally cylindrical (e.g., having a generally circular cross section), and is operable to rotate about a rotational axis 110 (e.g., a long or principal axis of the rotary shaft 102). In some cases, the rotary shaft 102 can be a component in a mechanical device (e.g., a shaft or axle that moves during operation of the device).

The rotary shaft 102 includes several markings 112 on its exterior (e.g., on the surface or surfaces extending between its ends 114a and 114b). In some cases, the markings 112 can extend along an entire length of the rotary shaft 102. In some cases, the markings can extend along a portion of the length of the rotary shaft 102. Each of the markings has a particular reflection level (e.g., having optical properties that cause the markings to reflect a certain amount or proportion of incident light). In some cases, the markings 112 can alternate between markings having a relatively lower reflection level (e.g., reflecting relatively less incident light or a lower portion of incident light) and markings having a relatively higher reflection level (e.g., reflecting relatively more incident light or a greater portion of incident light).

The optical rotary encoder 104 includes a radiation source 116 (e.g., one or more light sources, such as ultraviolet light sources, infrared light sources, light emitting diodes, laser emitters, etc.), and receiving elements 118a and 118b (e.g., one ormore photodetectors, photodiodes, etc.). In some cases, the components of the optical rotary encoder 104 can be positioned on a common support structure (e.g., a support structure 120).

In an example operation of the system 100, the radiation source 116 emits radiation 122 (e.g., light) towards the rotatory shaft 102. At least some of the radiation is reflected by the rotary shaft 102 (e.g., by one or more of the markings 112), returns to the optical rotary encoder 104, and becomes incident upon the receiving elements 118a and/or 118b (e.g., incident light 124a and/or 124b). The receiving elements 118a and/or 118b measure the intensity of the incident light 124a and/or 124b, and output one or more measurement signals 126 to the computer system 106 (e.g., in the form of digital and/or analog signals).

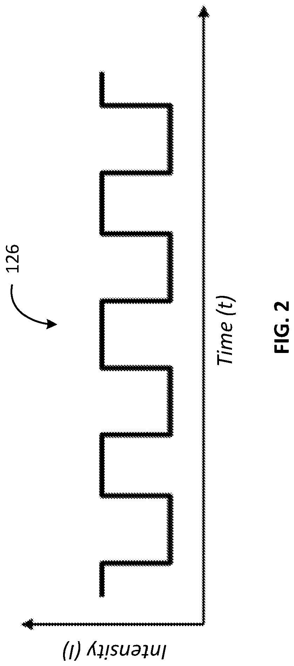

An example measurement signal 126 obtained by a single receiving element (e.g., the receiving element 118a) is shown in FIG. 2. As shown in FIG. 2, due to the rotation of the rotary shaft 102, the measurement signal 126 exhibits variations in intensity (e.g., as different markings 112 face the optical rotary encoder 104 over time).

The computer system 106 determines information regarding the angular position and/or motion of the rotary shaft 102 based on the measurement signal 126. For instance, the computer system 106 can detect and/or count the number of rotations of the rotary shaft over time. As an example, the computer system 106 can determine the number of changes in the intensity of the measurement signal 126 over a period of time (e.g., changes from a high intensity to a low intensity, and vice versa), and determine the angular rotation of the rotary shaft based on this determination and based on known characteristics of the rotary shaft 102 (e.g., the number and/or angular positions of the markings 112 on the rotary shaft 102).

In some cases, the computer system 106 can determine the angular position and/or motion of the rotary shaft 102, and control the operation of a device based on the information (e.g., instruct a motor to reposition the rotary shaft 102). In some cases, the computer system 106 can determine the angular position and/or motion of the rotary shaft 102, and output this information to another device. As an example, the computer system 106 can output the information to a display device 108 (e.g., a monitor, display screen, indicator light, etc.) for presentation to a user. As another example, the computer system 106 can output the information to another component (e.g., another computer system) to indicate that the rotary shaft 102 has been moved in a particular manner.

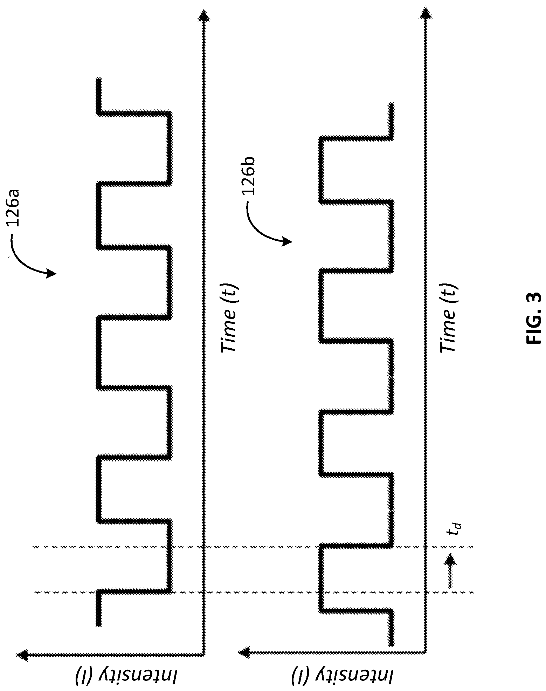

In some cases, the optical rotary encoder 104 can obtain multiple measurement signals concurrently. For instance, FIG. 3 shows two measurement signals 126a and 126b obtained by the receiving elements 118a and 118b, respectively. As shown in FIG. 3, due to the rotation of the rotary shaft 102, each of the measurement signals 126a and 126b exhibits variations in intensity (e.g., as different markings 112 face the optical rotary encoder 104 over time). Further, due to the different light paths of light incident on the receiving elements 118a and 118b, the measurement signals 126a and 126b are shifted in time with respect to one another (e.g., by a time delay *t_{d}*). In a similar manner as described above, the computer system 106 can determine information regarding the angular position and/or motion of the rotary shaft 102 based on the measurement signals 126a and 126b.

In the examples described above, rotation-based variation in the measurement signals 126 is achieved using markings 112 having different reflection levels (e.g., an arrangement of reflective and non-reflective elements or stripes on the rotary shaft 102). However, other features also can be used to produce rotation-based variation in measurement signals, either instead of or in addition to markings 112.

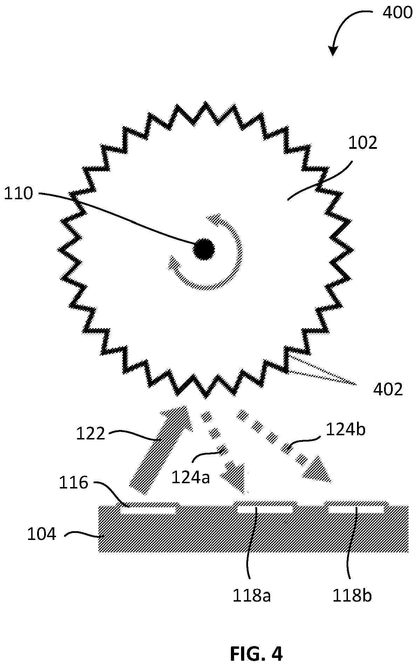

As an example, FIG. 4 shows another system 400 for measuring the angular position and/or motion of a rotary shaft 102. The system 100 includes an optical rotary encoder 104, a computer system 106, and a display device 108. For ease of illustration, the computer system 106, and a display device 108 have been omitted from FIG. 4.

In general, the system 400 can operate in a similar manner as the system 100 shown and described with respect to FIG. 1. For example, a radiation source 116 of the optical rotary encoder 104 can emit radiation 122 (e.g., light) towards the rotatory shaft 102. At least some of the radiation is reflected by the rotary shaft 102, returns to the optical rotary encoder 104, and becomes incident upon the receiving elements 118a and/or 118b (e.g., incident light 124a and/or 124b). The receiving elements 118a and/or 118b measure the intensity of the incident light 124a and/or 124b, and output one or more measurement signals 126 to the computer system 106 (e.g., in the form of digital and/or analog signals).

However, in this example, the rotary shaft 102 includes a number of structures 402 that reflect light differently towards the optical rotary encoder 104, depending on angular position of the rotary shaft 102 with respect to the optical rotary encoder 104. As an example, the structures 402 can include saw-teeth structures (e.g., structures having generally triangular-cross-sections along a plane orthogonal to the rotational axis 110). Due to the rotation of the rotary shaft 102, the measurement signal 126 exhibits variations in intensity (e.g., as different surfaces of the structures 402 face the optical rotary encoder 104 over time).

The systems described herein can be used in various applications. As an example, at least some systems can be used as a "pure" measurement device for measuring the angular position and/or motion of a rotary shaft (e.g., in the context of industrial machines, robotics, special purpose photographic lenses, rotating-radar-platforms, etc.).

As another example, at least some systems described herein can be used as a user input interface (e.g., in the context of computers, microcontroller units, etc.). For instance, an optical rotary encoder can be used in an audio amplifier device (e.g., a "stereo system") to detect a user manipulating a control knob (e.g., rotating a volume knob to increase or decrease the output volume of audio, rotating a frequency selection knob to select a frequency of a radio station, etc.).

Further, an optical rotary encoder as described herein can be used in a smartphone or a wearable device (e.g., a smartwatch). For instance, a rotary encoder can be used to detect a user manipulating a control knob for browsing and/or selecting options presented by the device (e.g., via a software application).

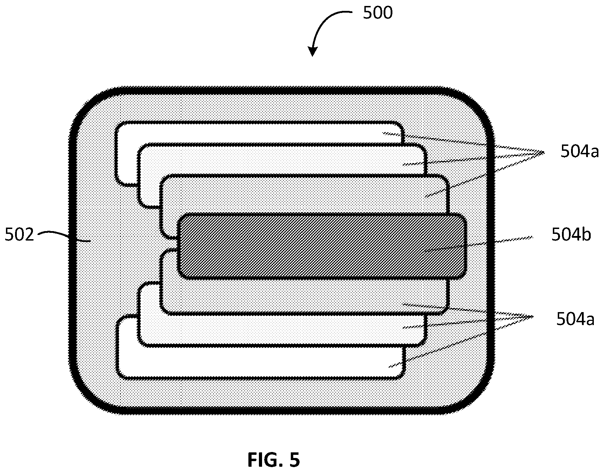

As an example, FIG. 5 shows an electronic device 500 (e.g., a smartphone or wearable device) having a display device 502 (e.g., a monitor or screen) for presenting information to a user (e.g., via a graphical user interface). In this example, the electronic device 500 presents several menu options 504 in a rotary layout. A currently selected menu option 504a is presented in the center of the rotary layout (e.g., depicted as the highlighted uppermost menu option), while currently unselected or inactive menu options 504b are presented away from the center of the rotary layout (e.g., depicted as lowlighted menu options layered beneath the highlighted menu option).

An optical rotary encoder can be used as an input device in the context of the electronic device 500. For example, the electronic device 500 can include a control knob (e.g., a crown) mechanically coupled to a rotary shaft. As a user rotates the control knob, the optical rotary system detects variations in light reflected from the rotary shaft (e.g., due to different markings and/or structures), and outputs measurement signals indicative of these variations. A computer system of the electronic device 500 can interpret these measurement signals to determine a rotation of the rotary shaft (and correspondingly a rotation of the control knob), and adjust the operation of the electronic device 500 to reflect the rotation (e.g., updating the display screen such that a different menu option is selected).

In some cases, a user interface of an electronic device 500 can allow a user to confirm a selection via an additional input. For instance, referring to FIG. 5, a user can cycle through the menu options 504 until a particular menu option is selected. When the desired menu option is selected, the user can provide an additional input to the electronic device 500 (e.g., pressing a button) to confirm the selection.

In some cases, a user can manipulate a common control knob of an electronic device to (i) cycle through menu options, and (ii) provide additional input confirming a selection. As an example, as described above, a user can rotate a control knob (e.g., a crown) to cycle through various menu options. Further, a user can press the control knob into the electronic device (e.g., such that the rotary shaft shifts longitudinally along its rotational axis) to confirm the selection. Thus, a user can rotate the control knob and/or press the control knob (e.g., actuate the control knob in a similar manner as a "push button") to input different commands.

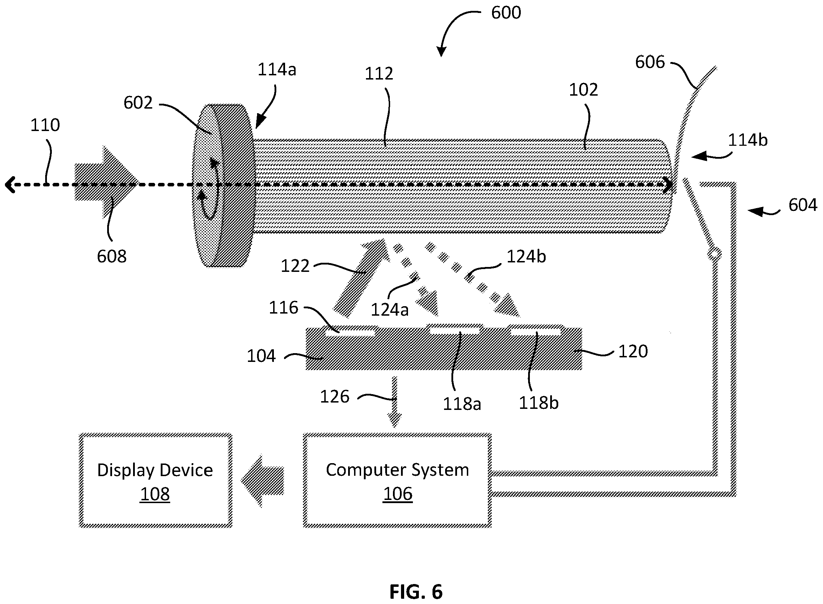

As an example, FIG. 6 shows a system 600 for (i) measuring the angular position and/or motion of a rotary shaft 102, and (ii) detecting a longitudinal movement of the rotary shaft 102. The system 600 includes an optical rotary encoder 104, a computer system 106, and a display device 108. The system 100 also includes a control knob 602 mechanically coupled to the rotary shaft 102 (e.g., at the end 114a). The system 600 can be used, for example, to control an electronic device 500.

In general, the system 600 can operate in a similar manner as the system 100 and/or system 400 as shown and described with respect to FIGS. 1 and 4, respectively. For example, a radiation source 116 of the optical rotary encoder 104 can emit radiation 122 (e.g., light) towards the rotatory shaft 102. At least some of the radiation is reflected by the rotary shaft 102, returns to the optical rotary encoder 104, and becomes incident upon the receiving elements 118a and/or 118b (e.g., incident light 124a and/or 124b). The receiving elements 118a and/or 118b measure the intensity of the incident light 124a and/or 124b, and output one or more measurement signals 126 to the computer system 106 (e.g., in the form of digital and/or analog signals). The computer system 106 can detect a user rotating the control knob 602 based on the variations in the measurement signals 126, and control the operation of the electronic device 500 accordingly.

In this example, the system 600 also includes a switching contact mechanism 604 (e.g., a push button mechanism) positioned proximate to the end 114b of rotary shaft 102. Further, the system 600 includes a spring element 606 that biases the rotary shaft 102 away from the switching contract mechanism 604. When a user is not pressing the control knob 602, the rotary shaft 102 is positioned away from the switch contact mechanism 604, and the switching contact mechanism 604 remains electrically open. When the user presses the control knob 602 inward (e.g., in the direction of arrow 608), the rotary shaft 102 presses against the switch contact mechanism 604, and causes the switching contact mechanism 604 to electrically close. The computer system 106 can detect the opening and closing of the switch contact mechanism 604 (e.g., via wires or a flexible printed circuit board), and control the operation of the electronic device 500 accordingly.

In the example shown in FIG. 6, longitudinal movement of the rotary shaft 102 (e.g., corresponding to a user's pressing of a control knob) is detected via a mechanical push-button mechanism that is separate from the optical rotary encoder 104. However, in some cases, longitudinal movement of the rotary shaft 102 can be detected by the optical rotary encoder 104 instead of a mechanical push-button mechanism. This feature can be beneficial, for example, in reducing the overall physical size of the system (e.g., enabling it to be used in the context of small devices, such as smart phones or wearable devices). Further, this feature can reduce the number of wires or interconnections that are input into a computer system 106, thereby reducing the overall complexity of the computer system 106 and/or electronic device. Further, this feature can enable the electronic device to be manufactured more quickly, more cheaply, and/or more reliably.

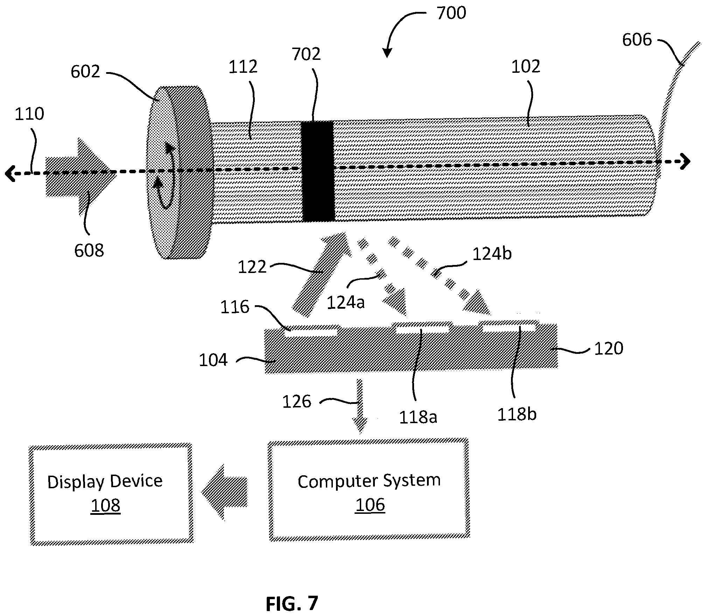

As an example, FIG. 7 shows a system 700 for (i) measuring the angular position and/or motion of a rotary shaft 102, and (ii) detecting a longitudinal movement of the rotary shaft 102 using an optical rotary encoder. The system 700 includes an optical rotary encoder 104, a computer system 106, and a display device 108. The system 100 also includes a control knob 602 mechanically coupled to the rotary shaft 102 (e.g., at the end 114a). The system 600 can be used, for example, to control an electronic device 500.

In general, the system 700 can operate in a similar manner as the system 100, system 400, and/or system 600 as shown and described with respect to FIGS. 1, 4, and 6 respectively. For example, a radiation source 116 of the optical rotary encoder 104 can emit radiation 122 (e.g., light) towards the rotatory shaft 102. At least some of the radiation is reflected by the rotary shaft 102, returns to the optical rotary encoder 104, and becomes incident upon the receiving elements 118a and/or 118b (e.g., incident light 124a and/or 124b). The receiving elements 118a and/or 118b measure the intensity of the incident light 124a and/or 124b, and output one or more measurement signals 126 to the computer system 106 (e.g., in the form of digital and/or analog signals). The computer system 106 can detect a user rotating the control knob 602 based on the variations in the measurement signals 126, and control the operation of the electronic device 500 accordingly.

However, in the example shown in FIG. 7, longitudinal movement of the rotary shaft 102 (e.g., corresponding to a user's pressing of a control knob) is also detected via the optical rotary encoder 104, rather than by a separate switch contact mechanism. For example, the system 700 includes a spring element 606 that biases the rotary shaft 102 outward from the electronic device (e.g., towards the left side of the page). Further, the rotary shaft 102 includes an additional marking 702 along its surface (e.g., a stripe or band encircling a portion of the rotary shaft 102). The additional marking 702 can be substantially non-reflective (e.g., substantially light absorbing).

As shown in FIG. 7, when a user is not pressing the control knob 602, the rotary shaft 102 is positioned such that the additional marking 702 is substantially not in the light path of the emitted radiation 122. Thus, when the rotary shaft is in this position, the additional marking 702 substantially does not affect the reflection of radiation from the rotary shaft towards the receiving elements 118a and 118b.

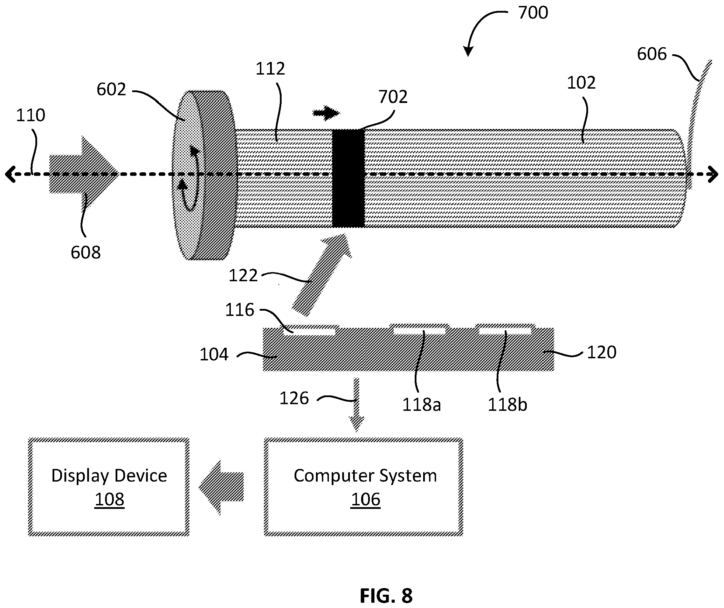

As shown in FIG. 8, when the user presses the control knob 602 inward (e.g., in the direction of arrow 608), the rotary shaft 102 shifts longitudinally along the rotational axis 110. When the rotary shaft 102 has shifted to a sufficient degree (e.g., when the user can pressed the button substantially to its fullest extent, or some other threshold distance), the additional marking 702 coincides with the light path of the emitted radiation 122. Thus, when the rotary shaft is in this position, the additional marking 702 reduces or eliminates the reflection of radiation from the rotary shaft towards the receiving elements 118a and 118b. The computer system 106 can detect this reduction or elimination of reflected light (e.g., by identifying a drop in intensity in the measurement signals 126), and based on this detection, determine that a user has pressed by the control knob 602. The computer system 106 can control the operation of the electronic device 500 accordingly (e.g., executing the user's selection). In some cases, the computer system 106 can detect that the control knob has been pressed by determining when the measurement signals correspond to zero or substantially zero intensity. In some cases, the computer system 106 can detect that the control knob has been pressed by determining when the measurement signals correspond to an intensity that is less than a threshold intensity value.

When the user releases the control knob 602, the rotary shaft is again biased outward from the electronic device (e.g., towards the left side of the page). In this position, the rotary shaft 102 is again positioned such that the additional marking 702 is substantially not in the light path of the emitted radiation 122. Thus, the additional marking 702 again substantially does not affect the reflection of radiation from the rotary shaft towards the receiving elements 118a and 118b.

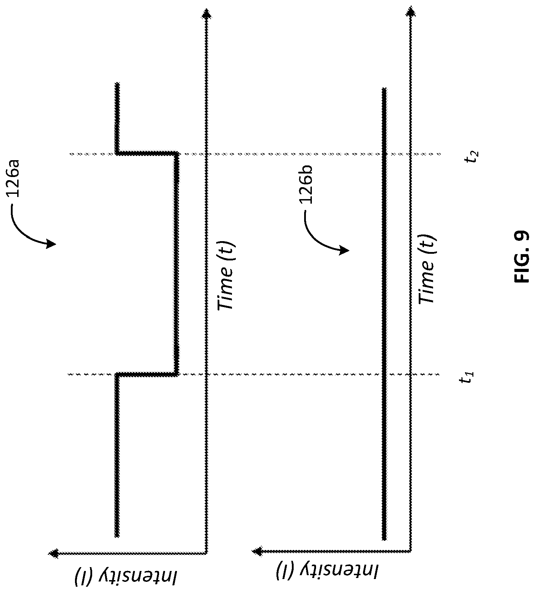

As an example, FIG. 9 shows two measurement signals 126a and 126b obtained by the receiving elements 118a and 118b, respectively. As shown in FIG. 9, prior to the control knob 602 being pressed (e.g., *t* < *t*₁), the intensity of the measurement signal 126a is relatively high. While the control knob 602 is being pressed (e.g., *t*₁ < *t* < *t*₂), the intensity of the measurement signal 126a drops (e.g., due to the additional marking 702 reducing or eliminating reflected light from the rotary shaft 102). While the control knob 602 is released (e.g., *t* > *t*₂), the intensity of the measurement signal 126a is again relatively high.

In this example, the intensity of the measurement signal 126b is low throughout (e.g., receiving element 118b is not active). However, in some cases, the intensity of the intensity of the measurement signal 126b also can vary in response to the pressing and/or releasing of the control knob 602 (e.g., by measuring light intensity using the receiving element 118b instead or in addition to the receiving element 118a).

In some cases, a rotary shaft can include two or more additional markings for detecting a longitudinal movement of the rotary shaft. This can be useful, for example, in determining how quickly a user pressed and/or released the control knob based on the measurement signals.

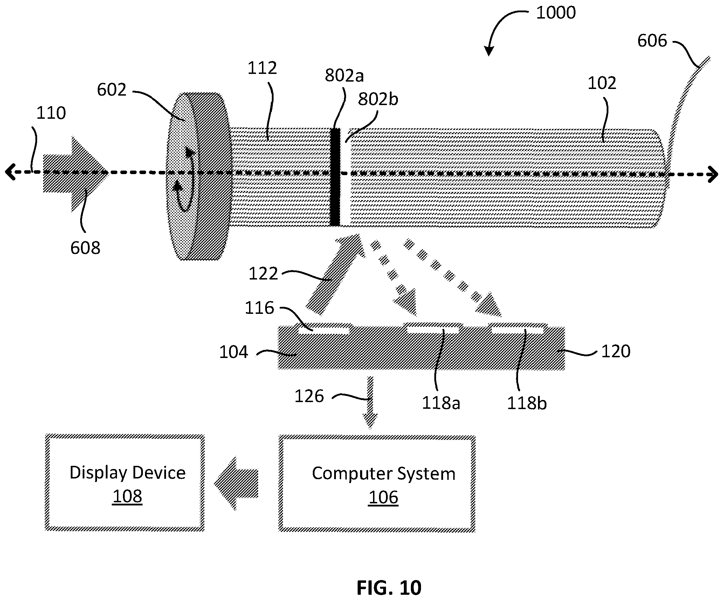

For example, FIG. 10 shows a system 1000 for (i) measuring the angular position and/or motion of a rotary shaft 102, and (ii) detecting a longitudinal movement of the rotary shaft 102 using an optical rotary encoder. The system 1000 includes an optical rotary encoder 104, a computer system 106, and a display device 108. The system 100 also includes a control knob 602 mechanically coupled to the rotary shaft 102 (e.g., at the end 114a). The system 600 can be used, for example, to control an electronic device 500.

In general, the system 1000 can operate in a similar manner as the system 700 as shown and described with respect to FIG. 7 respectively. For example, a radiation source 116 of the optical rotary encoder 104 can emit radiation 122 (e.g., light) towards the rotatory shaft 102. At least some of the radiation is reflected by the rotary shaft 102, returns to the optical rotary encoder 104, and becomes incident upon the receiving elements 118a and/or 118b (e.g., incident light 124a and/or 124b). The receiving elements 118a and/or 118b measure the intensity of the incident light 124a and/or 124b, and output one or more measurement signals 126 to the computer system 106 (e.g., in the form of digital and/or analog signals). The computer system 106 can detect a user rotating the control knob 602 based on the variations in the measurement signals 126, and control the operation of the electronic device 500 accordingly. Further, longitudinal movement of the rotary shaft 102 (e.g., corresponding to a user's pressing of a control knob) is also detected via the optical rotary encoder 104. For example, the system 100 includes a spring element 606 that biases the rotary shaft 102 outward from the electronic device (e.g., towards the left side of the page).

In this example, the rotary shaft 102 includes two additional markings 802a and 802b along its surface. The reflection level of one marking is greater than the reflection level of the other marking. For example, the additional marking 802a can be substantially reflective, whereas the additional arming 802b can be substantially non-reflective or light absorbing (e.g., the reflection level of additional marking 802a and greater than the reflection level of the additional marking 802b). In some cases, the additional markings 802a and 802b can be stripes or bands encircling portions of the rotary shaft 102.

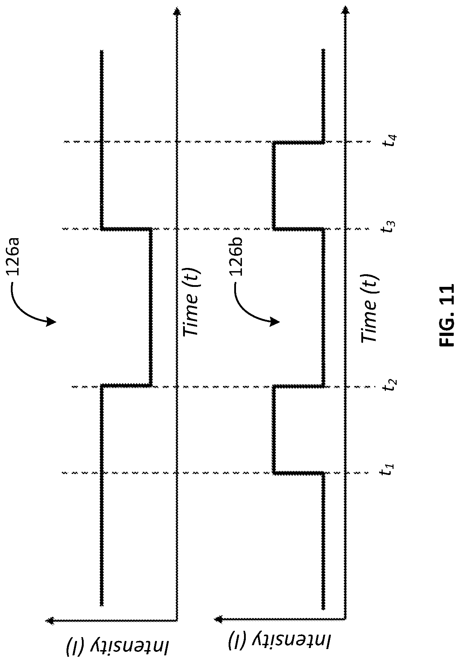

FIG. 11 shows two measurement signals 126a and 126b obtained by the receiving elements 118a and 118b, respectively. As the user presses the control knob 602 inward (e.g., in the direction of arrow 608), the rotary shaft 102 shifts longitudinally along the rotational axis 110. As the rotary shaft 102 shifts, the additional marking having a higher reflection level (e.g., additional marking 802b) is moved into the light path of the emitted radiation 122. Accordingly, the intensities of the measurement signals 126a and 126b are relatively higher during this time (e.g., *t*₁ < *t* < *t*₂).

As the user presses the control knob 602 further inward, the additional marking having a higher reflection level (e.g., additional marking 802b) is moved beyond the light path of the emitted radiation 122, and the additional marking having a lower reflection level (e.g., additional marking 802a) is moved into the light path of the emitted radiation 122. Accordingly, the intensities of the measurement signals 126a and 126b are relatively higher during this time (e.g., *t*₂ < *t* < *t*₃).

The computer system 106 can determine how quickly the user pressed the control knob 602 inward based on the variations in the measurement signals 126a and/or 126b. For example, the time between the increase in signal and the following decrease in signal (e.g., *t*₂ - *t*₁) can correlate with how quickly the control knob was pressed inward. For instance, if this time is shorter, the computer system 106 can determine that the user pressed the control knob 602 quickly. If this time is longer, the computer system 106 can determine that the user pressed the control knob 602 more slowly.

The computer system 106 is able to interpret the pressing of the control knob 602 as different user inputs (e.g., corresponding to different user commands or instructions), depending on the speed at which it was pressed. If the control knob 602 was pressed relatively slowly (e.g., *t*₂ - *t*₁ is greater than a threshold value, such as 825 µs), the computer system 106 can interpret the press as a first input (e.g., confirming selection of a highlighted menu option 504b, as shown in FIG. 5). If the control knob 602 was pressed relatively quickly (e.g., the difference *t*₂ - *t*₁ is less than a threshold value, such as 550 µs), the computer system 106 can interpret the press as a second input (e.g., confirming selection of a highlighted menu option 504b, as shown in FIG. 5, and further instructing the electronic device to perform an additional action, such as initiating a "start menu" of the user interface). The foregoing threshold values and inputs are merely illustrative examples. In practice, different threshold values and/or inputs can be used, depending on the implementation.

Similarly, the computer system 106 can determine how quickly the user released the control knob 602 based on the variations in the measurement signals 126a and/or 126b. For example, when the user begins releasing the control knob 602, the rotary shaft 102 is biased in the opposite direction along its rotational axis 110 (e.g., towards the left side of the page). As the rotary shaft 102 shifts, the additional marking having the lower reflection level (e.g., additional marking 802a) is moved beyond the light path of the emitted radiation 122, and the additional marking having the higher reflection level (e.g., additional marking 802b) is again moved into the light path of the emitted radiation 122. Accordingly, the intensities of the measurement signals 126a and 126b are relatively higher during this time (e.g., *t*₃ < *t* < *t*₄).

As the user further releases the control knob 602, the additional marking having the higher reflection level (e.g., additional marking 802b) is also moved beyond the light path of the emitted radiation 122. Accordingly, the intensities of the measurement signals 126a and 126b are relatively lower during this time (e.g., *t* > *t*₄).

In a similar manner as described above, the computer system 106 can determine how quickly the user released the control knob 602 inward based on the variations in the measurement signals 126a and/or 126b. The time between the increase in signal and the following decrease in signal (e.g., *t*₃ - *t*₄) correlates with how quickly the control knob was released. For instance, if this time is shorter, the computer system 106 can determine that the user released the control knob 602 quickly. If this time is longer, the computer system 106 can determine that the user released the control knob 602 more slowly. Similarly, the computer system 106 can interpret different release speeds as corresponding to different user inputs (e.g., different user commands or instructions).

Although example markings for detecting a longitudinal movement of the rotary shaft are shown above (e.g., with respect to FIGS. 7, 8, and 10), these are merely illustrative examples. In practice, different markings also can be used, either instead of or in addition to those shown above.

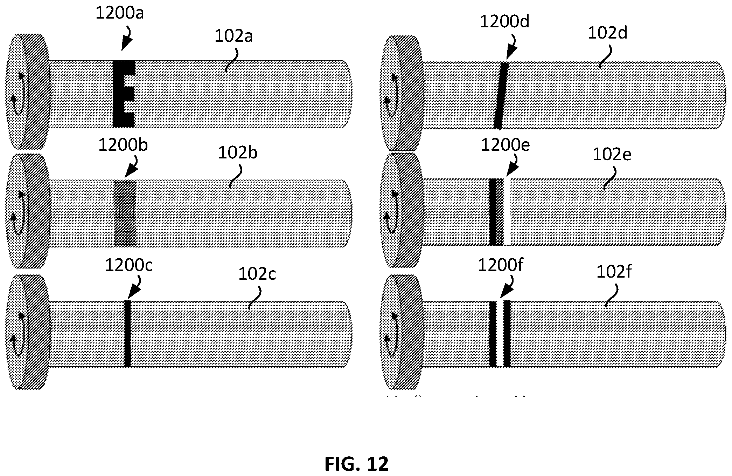

As examples, FIG. 12 show example rotary shafts 102a-102f, each having a different arrangement of markings 1200a-f, respectively.

The rotary shaft 102a includes markings 1200a for detecting a longitudinal movement of the rotary shaft having a pattern of separations (e.g., portions of the markings 1200a extend further along the rotational axis of the rotary shaft than others).

The rotary shaft 102b includes markings 1200b for detecting a longitudinal movement of the rotary shaft that are transparent or substantially transparent.

The rotary shaft 102c includes markings 1200c for detecting a longitudinal movement of the rotary shaft that are relatively narrow

The rotary shaft 102d includes markings 1200d for detecting a longitudinal movement of the rotary shaft that are diagonally arranged (e.g., at an oblique angle with respect to the rotational axis of the rotary shaft).

The rotary shaft 102e includes a combination of three different markings 1200e for detecting a longitudinal movement of the rotary shaft (e.g., markings with three different reflection levels).

The rotary shaft 102f includes another combination of three different markings 1200f for detecting a longitudinal movement of the rotary shaft (e.g., markings with two different reflection levels).

In some implementations, each of the markings (collectively a portion) can be configured to absorb or reflect a different set of wavelengths or range(s) of wavelengths. In such instances, a radiation source (e.g., a light source or light generating element, such as one or more light emitting diodes, laser emitters, etc.) can be configured to emit a range of wavelengths, such as a white-light source. Further, each of the receiving elements (e.g., light detecting elements, such as one or more photodetectors or photodiodes) can be configured to detect a different set of wavelengths or ranges of wavelengths.

As an example, an optical rotary encoder can include a radiation source configured to emit red and green light, or a first light source (e.g., a first light generating element) configured to emit red light and a second light source (e.g., a second light generating element) configured to emit green light. The optical rotary encoder can also include a first marking (e.g., a first sub-portion) configured to reflect red light, a second marking (e.g., a second sub-portion) configured to reflect green light. Further, the optical rotary encoder can also include a first receiving element (e.g., a first light detecting element) configured to detect red light, and a second receiving element (e.g., a second light detecting element) configured to detect green light.

Although only two ranges of wavelengths (e.g., red and green) are described in the example above, this is merely an illustrative example. In practice, any number of ranges of wavelengths can be used in a similar manner (e.g., three, four, or more). For example, an optical rotary encoder can include a red marking, a green marking, and a blue marking. The optical rotary encoder can include a white light source, and an array of light sensitive pixels including a color filter array (e.g., red, green, and blue filters). The white-light source can be configured to direct light onto the red marking at a first position, the green marking at the second position, and the blue marking at a third position. All reflected light, whether originating from the red, green, or blue marking, can be directed to the array of light sensitive pixels. The measured intensity of the red, green, or blue light can correspond to the first position, second position, third position, or positions in between.

In some implementations, the rotary shaft can be tapered. The tapered rotary shaft can be used to recognize a longitudinal movement of the rotary shaft (e.g., corresponding to the pressing of a control knob) by altering the amount of light directed to one or more receiving elements

In some implementations, the markings take the form of troughs and/or protrusions extending from the rotary shaft. The troughs and/or protrusions can be used to recognize a longitudinal movement of the rotary shaft (e.g., corresponding to the pressing of a control knob) by altering the amount of light directed to one or more receiving elements.

The optical rotary encoders described in this disclosure can be used for, or integrated into, wearable devices (e.g., smartwatches), mobile computational devices (e.g., smart phones), or other devices, such as household appliances and automobiles. In some implementations, the optical rotary encoders described herein can be used for applications requiring greater robustness to moisture, dust, etc. than traditional push-button technology.

In some instances, a computer system includes a central processing unit (CPU), a micro-controlling unit (MCU), and/or a microprocessor. At least part of the computer system can be implemented via a host device into which the optical rotary encoder is integrated. For example, in some implementations, the optical rotary encoder can be integrated into a smartwatch. Signals from the optical rotary encoder can be directed to a CPU, MCU, and/or microprocessor within the smartwatch or in electrical communication with the smartwatch and processed as indicated above.

### Example Systems

Some implementations of the subject matter and operations described in this specification can be implemented in digital electronic circuitry, or in computer software, firmware, or hardware, including the structures disclosed in this specification and their structural equivalents, or in combinations of one or more of them. For example, in some implementations, one or more components of the systems 100, 400, 600, 700, and 1000 (e.g., the computer system 106) can be implemented using digital electronic circuitry, or in computer software, firmware, or hardware, or in combinations of one or more of them. In another example, the electronic device 500 can be implemented using digital electronic circuitry, or in computer software, firmware, or hardware, or in combinations of one or more of them.

Some implementations described in this specification can be implemented as one or more groups or modules of digital electronic circuitry, computer software, firmware, or hardware, or in combinations of one or more of them. Although different modules can be used, each module need not be distinct, and multiple modules can be implemented on the same digital electronic circuitry, computer software, firmware, or hardware, or combination thereof.

Some implementations described in this specification can be implemented as one or more computer programs, i.e., one or more modules of computer program instructions, encoded on computer storage medium for execution by, or to control the operation of, data processing apparatus. A computer storage medium can be, or can be included in, a computer-readable storage device, a computer-readable storage substrate, a random or serial access memory array or device, or a combination of one or more of them. Moreover, while a computer storage medium is not a propagated signal, a computer storage medium can be a source or destination of computer program instructions encoded in an artificially generated propagated signal. The computer storage medium can also be, or be included in, one or more separate physical components or media (e.g., multiple CDs, disks, or other storage devices).

The term "data processing apparatus" encompasses all kinds of apparatus, devices, and machines for processing data, including by way of example a programmable processor, a computer, a system on a chip, or multiple ones, or combinations, of the foregoing. The apparatus can include special purpose logic circuitry, e.g., an FPGA (field programmable gate array) or an ASIC (application specific integrated circuit). The apparatus can also include, in addition to hardware, code that creates an execution environment for the computer program in question, e.g., code that constitutes processor firmware, a protocol stack, a database management system, an operating system, a cross-platform runtime environment, a virtual machine, or a combination of one or more of them. The apparatus and execution environment can realize various different computing model infrastructures, such as web services, distributed computing and grid computing infrastructures.

A computer program (also known as a program, software, software application, script, or code) can be written in any form of programming language, including compiled or interpreted languages, declarative or procedural languages. A computer program may, but need not, correspond to a file in a file system. A program can be stored in a portion of a file that holds other programs or data (e.g., one or more scripts stored in a markup language document), in a single file dedicated to the program in question, or in multiple coordinated files (e.g., files that store one or more modules, sub programs, or portions of code). A computer program can be deployed to be executed on one computer or on multiple computers that are located at one site or distributed across multiple sites and interconnected by a communication network.

Some of the processes and logic flows described in this specification can be performed by one or more programmable processors executing one or more computer programs to perform actions by operating on input data and generating output. The processes and logic flows can also be performed by, and apparatus can also be implemented as, special purpose logic circuitry, e.g., an FPGA (field programmable gate array) or an ASIC (application specific integrated circuit).

Processors suitable for the execution of a computer program include, by way of example, both general and special purpose microprocessors, and processors of any kind of digital computer. Generally, a processor will receive instructions and data from a read only memory or a random access memory or both. A computer includes a processor for performing actions in accordance with instructions and one or more memory devices for storing instructions and data. A computer may also include, or be operatively coupled to receive data from or transfer data to, or both, one or more mass storage devices for storing data, e.g., magnetic, magneto optical disks, or optical disks. However, a computer need not have such devices. Devices suitable for storing computer program instructions and data include all forms of non-volatile memory, media and memory devices, including by way of example semiconductor memory devices (e.g., EPROM, EEPROM, flash memory devices, and others), magnetic disks (e.g., internal hard disks, removable disks, and others), magneto optical disks, and CD-ROM and DVD-ROM disks. The processor and the memory can be supplemented by, or incorporated in, special purpose logic circuitry.

To provide for interaction with a user, operations can be implemented on a computer having a display device (e.g., a monitor, or another type of display device) for displaying information to the user and a keyboard and a pointing device (e.g., a mouse, a trackball, a tablet, a touch sensitive screen, or another type of pointing device) by which the user can provide input to the computer. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input. In addition, a computer can interact with a user by sending documents to and receiving documents from a device that is used by the user; for example, by sending webpages to a web browser on a user's client device in response to requests received from the web browser.

A computer system may include a single computing device, or multiple computers that operate in proximity or generally remote from each other and typically interact through a communication network. Examples of communication networks include a local area network ("LAN") and a wide area network ("WAN"), an inter-network (e.g., the Internet), a network comprising a satellite link, and peer-to-peer networks (e.g., ad hoc peer-to-peer networks). A relationship of client and server may arise by virtue of computer programs running on the respective computers and having a client-server relationship to each other.

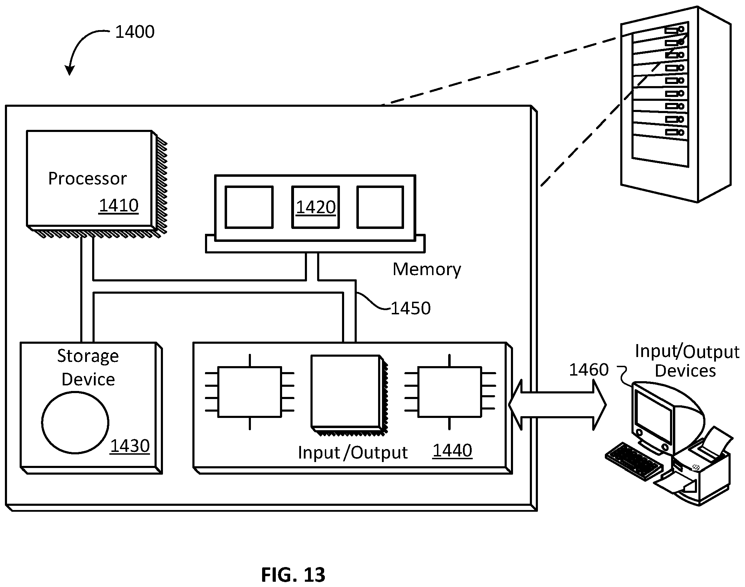

FIG. 13 shows an example computer system 1300 that includes a processor 1310, a memory 1320, a storage device 1430 and an input/output device 1340. In some implementation, at a least a portion of the systems described herein (e.g., the computer system 106) can be implemented using the computer system 1300. Each of the components 1310, 1320, 1330 and 1340 can be interconnected, for example, by a system bus 1350. In some implementations, the computer system 1300 can be used to control the operation of a spectrometer. For example, the computer system 106 can include a computer system 1300 to control the operation of one or more components of a system and/or electronic device. The processor 1310 is capable of processing instructions for execution within the system 1300. In some implementations, the processor 1310 is a single-threaded processor, a multi-threaded processor, or another type of processor. The processor 1310 is capable of processing instructions stored in the memory 1320 or on the storage device 1330. The memory 1320 and the storage device 1330 can store information within the system 1300.

The input/output device 1340 provides input/output operations for the system 1300. In some implementations, the input/output device 1340 can include one or more of a network interface device, e.g., an Ethernet card, a serial communication device, e.g., an RS-232 port, and/or a wireless interface device, e.g., an 802.11 card, a 3G wireless modem, a 4G wireless modem, a 5G wireless modem, etc. In some implementations, the input/output device can include driver devices configured to receive input data and send output data to other input/output devices, e.g., keyboard, printer and display devices 1360. In some implementations, mobile computing devices, mobile communication devices, and other devices can be used.

## Claims

1. An optical encoder (104) comprising:
a rotary shaft (102) having a rotational axis (110), the rotary shaft being actuatable along the rotational axis;
at least one light generating element (116) operable to generate light (122); and
at least one light detecting element (118a, 118b) operable to detect light (124a, 124b) and convert the detected light into a signal (126);
wherein the rotary shaft includes a portion operable to reflect light generated from the at least one light generating element onto the at least one light detecting element wherein the signal is generated;
the portion being configured such that an actuation of the rotary shaft from a first position to a second position generates a corresponding change in the signal generated in the at least one light detecting element;
wherein the corresponding change in the signal generated in the at least one light detecting element is correlated with a user actuation of the rotary shaft, and further with the speed of the user actuation of the rotary shaft;
wherein the optical encoder further includes a computational unit, the computational unit being in electrical communication with the at least one light detecting element, the computational unit being operable to receive the signal from the at least one light detecting element, and being further operable to correlate the corresponding change in the signal to the user actuation of the rotary shaft and the speed of the actuation.

2. The optical encoder of claim 1, wherein the portion includes a plurality of sub-portions having different optical properties such that the actuation of the rotary shaft from the first position to second position generates the corresponding change in the signal generated in the at least one light detecting element.

3. The optical encoder of claim 2, wherein the at least one sub-portion within the plurality has a substantially different reflectivity than another sub-portion within the plurality.

4. The optical encoder of claim 2 or 3, wherein at least one sub-portion within the plurality is substantially absorbing.

5. The optical encoder of claim 2, wherein the at least one sub-portion within the plurality has a substantially different optical property than another sub-portion within the plurality.

6. The optical encoder of claim 1, wherein the portion is tapered along the rotational axis of the rotary shaft, such that the actuation of the rotary shaft from the first position to the second position generates the corresponding change in the signal generated in the at least one light detecting element.

7. The optical encoder of claim 1, wherein the computational unit includes a microprocessor, a central processing unit, and/or a micro-controller.

8. The optical encoder of claim 7, wherein at least a portion of the computational unit is included in a host device.

9. The optical encoder of claim 8, wherein the host device is a portable computational device.

10. The optical encoder of claim 7, wherein the portable computational device is a smartphone or a smartwatch.

## Patentansprüche

1. Optischer Codierer (104), umfassend:
eine Drehwelle (102), welche eine Drehachse (110) aufweist, wobei die Drehwelle entlang der Drehachse betätigbar ist;
mindestens ein lichterzeugendes Element (116), welches betreibbar ist, um Licht (122) zu erzeugen; und
mindestens ein lichtdetektierendes Element (118a, 118b), welches betreibbar ist, um Licht (124a, 124b) zu detektieren und das detektierte Licht in ein Signal (126) umzuwandeln;
Wobei die Drehwelle einen Abschnitt umfasst, welcher betreibbar ist, um auf das lichtdetektierende Element, in dem das Signal erzeugt wird, Licht zu reflektieren, welches von dem mindestens einem lichterzeugenden Element erzeugt wird;
wobei der Abschnitt derart konfiguriert ist, dass eine Betätigung der Drehwelle von einer ersten Position zu einer zweiten Position eine entsprechende Änderung in dem Signal erzeugt, welches in dem mindestens einen lichtdetektierenden Element erzeugt wurde;
wobei die entsprechende Änderung in dem Signal, das in dem mindestens einen lichtdetektierenden Element erzeugt wird, mit einer Benutzerbetätigung der Drehwelle korreliert, und ferner mit der Geschwindigkeit der Benutzerbetätigung der Drehwelle;
wobei der optische Codierer ferner eine Recheneinheit umfasst, wobei die Recheneinheit elektrisch mit dem mindestens einen lichtdetektierenden Element in Verbindung steht, wobei die Recheneinheit betreibbar ist, um das Signal von dem mindestens einen lichtdetektierenden Element zu empfangen und ferner betreibbar ist, um die entsprechende Änderung des Signals mit der Benutzerbetätigung der Drehwelle und der Betätigungsgeschwindigkeit zu korrelieren.

2. Optischer Codierer nach Anspruch 1, wobei der Abschnitt eine Vielzahl von Unterabschnitten umfasst, welche unterschiedliche optische Eigenschaften aufweisen, derart, dass die Betätigung der Drehwelle von der ersten Position zu der zweiten Position die entsprechende Änderung des Signals erzeugt, welche in dem mindestens einen lichtdetektierenden Element erzeugt wird.

3. Optischer Codierer nach Anspruch 2, wobei der mindestens eine Unterabschnitt innerhalb der Vielzahl ein Reflexionsvermögen aufweist, welches sich wesentlich von dem eines anderen Unterabschnitts der Vielzahl unterscheidet.

4. Optischer Codierer nach Anspruch 2 oder 3, wobei mindestens ein Unterabschnitt in der Vielzahl im Wesentlichen absorbierend ist.

5. Optischer Codierer nach Anspruch 2, wobei der mindestens eine Unterabschnitt in der Vielzahl eine optische Eigenschaft aufweist, welche sich wesentlich von der eines anderen Unterabschnitts der Vielzahl unterscheidet.

6. Optischer Codierer nach Anspruch 1, wobei der Abschnitt entlang der Drehachse der Drehwelle verjüngt ist, derart, dass die Betätigung der Drehwelle von der ersten Position zu der zweiten Position die entsprechende Änderung in dem Signal erzeugt, welches in dem mindestens einen lichtdetektierenden Element erzeugt wird.

7. Optischer Codierer nach Anspruch 1, wobei die Recheneinheit einen Mikroprozessor, eine Zentralverarbeitungseinheit und/oder einen Mikrocontroller umfasst.

8. Optischer Codierer nach Anspruch 7, wobei mindestens ein Teil der Recheneinheit in einer Host-Vorrichtung eingeschlossen ist.

9. Optischer Codierer nach Anspruch 8, wobei die Host-Vorrichtung eine tragbare Rechenvorrichtung ist.

10. Optischer Codierer nach Anspruch 7, wobei die tragbare Rechenvorrichtung ein Smartphone oder eine Smartwatch ist.

## Revendications

1. Codeur optique (104) comprenant :
un arbre rotatif (102) ayant un axe de rotation (110), l'arbre rotatif étant actionnable le long de l'axe de rotation;
au moins un élément générateur de lumière (116) pouvant fonctionner pour générer de la lumière (122); et
au moins un élément de détection de lumière (118a, 118b) pouvant fonctionner pour détecter la lumière (124a, 124b) et convertir la lumière détectée en un signal (126);
dans lequel l'arbre rotatif comprend une partie pouvant fonctionner pour réfléchir la lumière générée par le au moins un élément générateur de lumière sur le au moins un élément de détection de lumière dans lequel le signal est généré;
la partie étant configurée de telle sorte qu'un actionnement de l'arbre rotatif d'une première position à une seconde position génère un changement correspondant du signal généré dans le au moins un élément de détection de lumière;
dans lequel le changement correspondant du signal généré dans le au moins un élément de détection de lumière est corrélé avec un actionnement par un utilisateur de l'arbre rotatif, et en outre avec la vitesse de l'actionnement par l'utilisateur de l'arbre rotatif;
dans lequel le codeur optique comprend en outre une unité de calcul, l'unité de calcul étant en communication électrique avec l'au moins un élément de détection de lumière, l'unité de calcul pouvant fonctionner pour recevoir le signal de l'au moins un élément de détection de lumière, et pouvant en outre fonctionner pour corréler le changement correspondant du signal à l'actionnement par l'utilisateur de l'arbre rotatif et à la vitesse de l'actionnement.

2. Codeur optique selon la revendication 1, dans lequel la partie comprend une pluralité de sous-parties ayant des propriétés optiques différentes de sorte que l'actionnement de l'arbre rotatif de la première position à la seconde position génère le changement correspondant dans le signal généré dans le au moins un élément de détection de lumière.

3. Codeur optique selon la revendication 2, dans lequel la au moins une sous-partie de la pluralité a une réflectivité essentiellement différente d'une autre sous-partie de la pluralité.

4. Codeur optique selon la revendication 2 ou 3, dans lequel au moins une sous-partie de la pluralité est essentiellement absorbante.

5. Codeur optique selon la revendication 2, dans lequel la au moins une sous-partie de la pluralité a une propriété optique essentiellement différente de celle d'une autre sous-partie de la pluralité.

6. Codeur optique selon la revendication 1, dans lequel la partie est effilée le long de l'axe de rotation de l'arbre rotatif, de sorte que l'actionnement de l'arbre rotatif de la première position à la seconde position génère le changement correspondant dans le signal généré dans le au moins un élément de détection de lumière.

7. Codeur optique selon la revendication 1, dans lequel l'unité de calcul comprend un microprocesseur, une unité centrale de traitement, et/ou un microcontrôleur.

8. Codeur optique selon la revendication 7, dans lequel au moins une partie de l'unité de calcul est incluse dans un dispositif hôte.

9. Codeur optique selon la revendication 8, dans lequel le dispositif hôte est un dispositif de calcul portable.

10. Codeur optique selon la revendication 7, dans lequel le dispositif de calcul portable est un téléphone intelligent ou une montre connectée.
